## Europäisches Patentamt

## European Patent Office

## Office européen des brevets

(19)

(11) Numéro de publication: **0 219 399**
**B1**

(12)

# FASCICULE DE BREVET EUROPEEN

(45) Date de publication du fascicule du brevet:
**30.05.90**

(51) Int. Cl.⁵: **C08L 95/00, C08L 75/04**

(21) Numéro de dépôt: **86402075.5**

(22) Date de dépôt: **22.09.86**

(54) **Procédé de préparation d'une composition d'émulsion aqueuse de bitume-polyuréthanne.**

(30) Priorité: **30.09.85 FR 8514472**

(43) Date de publication de la demande:
**22.04.87 Bulletin 87/17**

(45) Mention de la délivrance du brevet:
**30.05.90 Bulletin 90/22**

(84) Etats contractants désignés:
**AT BE CH DE GB IT LI LU NL SE**

(56) Documents cités:
**DE-A- 2 052 703**
**FR-A- 1 567 320**
**FR-A- 2 250 858**
**US-A- 3 324 041**
**US-A- 3 909 474**
**US-A- 3 932 331**

(73) Titulaire: **SCREG ROUTES ET TRAVAUX PUBLICS,**
**18, rue Paul Lafargue La Défense 10 Cédex 32,**
**F-92099 Paris la Défense(FR)**

(72) Inventeur: **Lalanne, Marie-Florence, Résidence Génovia,**
**F-33400 Talence(FR)**
Inventeur: **Serfass, Jean-Pierre, 26, rue des Favorites,**
**F-75015 Paris(FR)**

(74) Mandataire: **Polus, Camille et al, c/o Cabinet**
**Lavoix 2, Place d'Estienne d'Orves, F-75441 Paris**
**Cedex 09(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

**Description**

La présente invention concerne un procédé de préparation d'une composition d'émulsion aqueuse de bitume-polyuréthanne réticulable à température ambiante.

L'utilisation de polymères du type d'émulsions de bitume-polymères est largement connue, particulièrement dans le domaine routier. En effet, l'incorporation de polymères dans les bitumes modifie leurs propriétés dans le sens d'une amélioration de la susceptibilité thermique et de la résistance à la rupture. Cependant, leur emploi est limité par une mise en oeuvre délicate qui nécessite des températures de 160 à 180°C occasionnant des dégradations des polymères, qui altèrent les performances mécaniques du liant.

Pour pallier à ces inconvénients, on a pensé élaborer des émulsions de bitume-polymères avec des latex de polymères. Pour obtenir des bitumes-polymères en évitant de les dégrader, on a également pensé à élaborer des polymères in situ dans le bitume en faisant réagir ensemble les constituants.

Ce sont les polyuréthannes et les résines époxydes qui ont été utilisés plus particulièrement.

D'une manière générale, quand on veut réaliser des composés bitume-polyuréthanne in situ, on ajoute à un matériau bitumineux des extenseurs de polyuréthannes et des isocyanates qui réagissent pour former une composition durcissable (voir par exemple US-A-3 179 610, -3 738 807, -3 372 083, GB-A-915 961, JA-79,14 426,-81,157 450,-57,153 056 et-78,11 953 (Kokai)). Dans tous ces brevets, le mode opératoire classique consiste à mélanger un matériau bitumeux avec des isocyanates et des extenseurs de polyuréthannes à des températures allant généralement de 80° à 120°C ou à des températures plus basses à condition d'utiliser un solvant.

Dans le cas où des résines époxydes sont utilisées, on ajoute à un matériau bitumineux une résine époxyde et un durcisseur aminé à la température de 80 à 90°C, ou en milieu solvant à plus basse température (GB-A-2 076 824 ou JA-58,32659, -82,00157). Mais, si on veut réaliser des émulsions bitumineuses, on est gêné car le durcissement des compositions engendre une hausse de viscosité qui rend difficile la mise en émulsion. De plus, dans le cas des polyuréthannes, on se heurte au problème de la réactivité des isocyanates provoquant des mousses avec l'eau.

Ainsi, le brevet US-A-3 932 331 décrit une méthode pour rompre et durcir rapidement une émulsion de bitume en incorporant un prépolymère uréthanne à terminaison NCO qui est formé par réaction à 80-120° d'un diisocyanate et d'un polyalkylèneglycol. Lorsque le prépolymère est ajouté à l'émulsion de bitume, il réagit avec l'eau, ce qui a pour effet de faire rompre l'émulsion. Cela rend impossible le stockage du mélange émulsion de bitume-prépolymère et nécessite l'application quasi simultanée des deux constituants, ce qui est une contrainte pour une mise en oeuvre efficace.

La brevet US-A-3 909 474 décrit une composition bitumineuse de bitume, polyol catalyseur-isocyanate, durcissable après oxydation du composant bitumineux. Lorsque la composition est émulsionnée, l'eau empêche la polymérisation de se poursuivre par suite de la réaction avec les isocyanates. De plus, cela suppose des problèmes de mousse lors de la mise en émulsion et du stockage.

Dans le brevet US-A-3 324 041 on décrit une émulsion où la phase dispersée comprend un polyépoxyde et un matériau bitumineux. Elle est obtenue par mélange de deux émulsions. Dans l'émulsion bitumineuse, il y a le matériau bitumineux, un polyamide et un agent de liaison de l'hydrogène. Une autre émulsion comprend un polyépoxyde et un émulsifiant non ionique. Séparément les émulsions sont stables longtemps. Mais, au moment du mélange, l'émulsion finale a une vie en pot de 16 h à 20°C. La réaction a lieu au moment du mélange de sorte qu'il faut stocker indépendamment chacune des émulsions et ne les mélanger que peu avant l'emploi.

La présente invention résout ce problème de stockage par élaboration d'une émulsion stable plusieurs mois sans se dégrader ni altérer les qualités du liant rompu.

L'invention a donc pour objet un procédé de préparation d'une composition d'émulsion aqueuse de bitume-polyuréthanne, caractérisé par les étapes suivantes :

(A) on réalise une émulsion de composition bitumineuse à partir de (a) une composition bitumineuse préparée en ajoutant, à une température de 100 à 150°C, 20 à 95 parties de bitume à 5 à 80 parties en poids d'un extenseur de polyuréthannes et (b) d'une phase aqueuse obtenue par dissolution dans l'eau de 1 à 20% en poids d'un émulsifiant choisi parmi un chlorhydrate de polyamine, un chlorhydrate d'amidoamine et un sel d'ammonium quaternaire, puis on émulsionne la composition bitumineuse (a) portée à une température de 120 à 150°C avec la phase aqueuse (b) portée à une température de 40 à 80°C ;

(B) on réalise une émulsion aqueuse de polyisocyanate en mélangeant, sous forte agitation, 20 à 50 parties en poids d'un polyisocyanate organique avec le complément à 100 parties d'eau ; et

(C) on mélange les émulsions (A) et (B).

Comme bitume, on peut utiliser un bitume de distillation directe, par exemple ayant une pénétration 80/100 ou 180/220.

L'extenseur de polyuréthannes peut notamment être choisi parmi un polyéthylèneglycol (PEG), polypropylèneglycol (PPG), les copolymères de PEG et de PPG, les polyéthers polyesters, ou de préférence du polybutadiène hydroxytéléchélique (PBHT) (c'est-à-dire à terminaisons hydroxyles).

La phase aqueuse (b) est obtenue par dissolution dans l'eau, de 1 à 20% en poids de l'émulsifiant constitué par un chlorhydrate de polyamine, un chlorhydrate d'amidoamine ou un sel d'ammonium quaternaire.

Les polyamines, amidoamines et ammonium quaternaires émulsifiants sont bien connus dans la littérature et contiennent généralement au moins un radical constitué par une chaîne aliphatique grasse, notamment un alkyle en $C_8$ à $C_{22}$, par exemple un radical dérivé du coprah, du suif, des acides oléïque, palmitique, stéarique, etc. Des polyamines du type polyalkylène polyamines éventuellement oxyalkylées et des alkyl-amidomines (obtenues par réaction d'un acide gras sur une diamine) sont décrits ou utilisés par exemple dans FR-A 2 109 474, 2 259 824, 2 367 820, 2 492 683, etc. Parmi les ammonium quaternaires émulsifiants utilisables, on peut citer ceux qui contiennent un ou deux radicaux à chaîne aliphatique grasse, no-tamment alkyle de $C_8$ à $C_{22}$, les deux, le cas échéant trois, autres groupes étant des radicaux alkyles, hydroxyalkyles ou aralkyles inférieurs, notamment méthyle, éthyle, hydroxyéthyle ou benzyle.

Dans le cas des chlorhydrates de polyamines ou d'amido-amines, on effectue notamment leur mise en solution à une température allant de 40 à 80°C, de préférence environ 60°C, puis, pour avoir le chlorhydrate, on ajoute une solution d'acide chlorhydrique de façon à ce que le rapport général polyamine/acide soit de 2,2 ou 3,3, ou que le rapport amidoamine/acide soit de 2 à 3,5, de préférence environ 3. Lorsque l'on utilise un sel d'ammonium il suffit de le dissoudre à température ambiante, sans addition d'acide.

L'émulsion de composition bitumineuse (A) est obtenue de préférence à partir d'une composition bitumineuse (a) portée à 140°C environ et d'une phase aqueuse (b) portée à 60°C environ, en une quantité telle que la teneur en liant de l'émulsion soit de 50 à 75% en poids, notamment 60%. Une telle émulsion est stable plusieurs mois.

Comme polyisocyanates organiques, on peut utiliser des polyisocyanates aromatiques, ou bien des prépolymères à radicaux isocyanate terminaux obtenus par réaction d'un excès d'un polyisocyanate avec un polyéther ou polyester à radicaux hydroxyle terminaux ou avec un polyol monomère. De préférence, on utilise des di- ou tri-isocyanates aromatiques, tels que les diisocyanates de phényle, de toluy-lène, de chlorophénylène, de naphtylène, de diphénylméthane, de diphénylène ou de diphényléther, en particulier le diphénylène 4,4'-diisocyanate, le 3,3'-diméthyldiphényl-4,4'-diisocyanate ou le 3-méthyl-diphénylméthane-4,4'-diisocyanate, ou les triisocyantes comme le 2,4,6-triisocynatotoluène et le 2,4,4'-triisocyanatodiphényléther. On préfère le diphénylméthane 4,4'-diisocyanate.

Selon une variante, on stabilise l'émulsion aqueuse de polyisocyanate (B) en ajoutant une certaine quantité de phase aqueuse (b) préalablement préparée, notamment de 1 à 9 parties en poids de phase aqueuse, par exemple 3 parties, pour 1 partie d'émulsion (B), et d'homogénéiser sous faible agitation.

Pour obtenir l'émulsion composite selon l'invention, il suffit de mélanger à température ambiante l'émulsion de la composition bitumineuse (A) avec l'émulsion de polyisocyanate (B) non stabilisée ou stabilisée comme décrit ci-dessus.

En proportion, on peut par exemple ajouter à 100 parties d'émulsion de composition bitumineuse (A), de 4 à 50 parties d'émulsion non stabilisée de polyisocyanate (B).

En alternative, à 100 parties d'émulsion bitumineuse (A), on peut ajouter de 15 à 120 parties d'émulsion de polyisocyanate stabilisé.

Si on utilise de l'émulsion de polyisocyanate non stabilisée, il faut l'ajouter dès son élaboration à l'émulsion bitumineuse, car elle n'est pas stable plus de 2h. L'émulsion composite en revanche peut rester stable jusqu'à plusieurs mois du fait que l'émulsion de polyisocyanate se stabilise au contact de la phase aqueuse de l'émulsion bitumineuse.

Si on utilise l'émulsion de polyisocyanate stabilisée, on peut la stocker quelques jours avant de la mélanger à l'émulsion bitumineuse. L'émulsion composite obtenue dans ce dernier cas est aussi stable puisque l'émulsion de polyisocyanate stabilisée est sur-stabilisée par le contact avec la phase aqueuse de l'émulsion bitumineuse.

Quand on a obtenu une émulsion stable, il faut vérifier qu'après rupture, il y a réaction des isocyanates avec les extenseurs de polyuréthannes in situ pour l'obtention d'un bitume-polyuréthanne.

Pour mettre en évidence la réaction de formation de polyuréthanne on a fait rompre de l'émulsion composite dès son élaboration et on a suivi en Infra-Rouge la réaction. La diminution d'intensité du pic d'absorption des isocyanates indique que le polyisocyanate a réagi avec les extenseurs de polyuréthannes de la composition bitumineuse.

L'analyse a également montré que les émulsions de bitume-polyuréthanne de longue stabilité selon l'invention sont réticulables après rupture, même à température ambiante.

Les exemples suivantes illustrent l'invention.

Exemple 1

A.a) On réalise une composition bitumineuse en mélangeant sous agitation à 140°C du bitume de pénétration 180/220 avec du polybutadiène hydroxytéléchélique (poly bd R45HT de la firme ARCO), dans la proportion 10/90 en PBHT/bitume.

b) D'un autre côté on prépare à 60°C une phase aqueuse contenant 17,5 g/l de polyamines (Polyram S de la Société CECA) et 8,75 g/l de diamines (Dinoram S de CECA), puis on ajoute 24 g/l d'acide chlorhydrique commercial à 33%.

On réalise l'émulsion de la composition bitumineuse en émulsionnant dans un appareillage type "Emulbitume" la composition bitumineuse à 140°C et la phase aqueuse à 60°C. On règle l'appareillage de façon à obtenir une émulsion à 60% en liant.

3

B. Ensuite, on émulsionne 40 parties de diphénylméthane 4,4′-diisocyanate autoémulsionnable (MDI) (SUPRASEC 1042 de ICI) sous agitation avec un appareil Ultra Turrax.

C. Enfin, on ajoute à 100 parties de l'émulsion de la composition bitumineuse (A) obtenue ci-dessus, 6 parties de l'émulsion diphénylméthane 4,4′-diisocyanate autoémulsionnable (B). On homogénéise manuellement l'ensemble et on obtient une émulsion composite de stabilité de longue durée.

Les diverses proportions sont rassemblées dans le Tableau 1 suivant.

Analyse

On prélève un échantillon d'émulsion dès son élaboration et on le fait rompre sur faces AgCl pour l'étudier en spectroscopie I.R. On enregistre périodiquement les spectres I.R. du film et on évalue le pourcentage d'isocyanate disparu avec le rapport d'intensité de la bande d'isocyanate ($2280 \text{ cm}^{-1}$). Les résultats rassemblés sur le Tableau II ci-après montrent que le pourcentage d'isocyanate diminue en fonction du temps, prouvant que la réaction a lieu.

D'un autre côté, on fait rompre sur plaque de verre de l'émulsion de la composition bitumineuse en tirant un film de 100 µm. De même on fait rompre sur plaque de verre de l'émulsion composite 2 h. après son élaboration.

On récupère les liants rompus issus des deux émulsions, on compare leurs caractéristiques et on les traite avec du tétrachlorure de carbone. Les résultats sont rassemblés sur le Tableau III suivant.

On étudie en I.R. la fraction soluble et la fraction insoluble. La partie soluble contient le matériau bitumineux alors que la partie insoluble constitue le polyuréthanne vérifiée par la présence de la bande uréthanne à $1750 \text{ cm}^{-1}$ et les bandes du PBHT à $970 \text{ cm}^{-1}$ et $920 \text{ cm}^{-1}$.

Exemple 2

On réalise une émulsion de composition bitumineuse comme dans l'exemple 1 (A).

D'un autre côté on fait une émulsion de diphénylméthane 4,4′-diisocyanate autoémulsionnable comme dans l'exemple 1 (B), puis on la stabilise en la mélangeant avec 3 parties d'une phase aqueuse de chlorhydrate de polyamines, obtenue par chauffage de l'eau avec 5,83 g/l de polyamines (Polygram S de CECA) et addition de 8 g/l de HCl à 33% (rapport pondéral polyamines/HCl 33% = 0,73).

On ajoute à 100 parties de l'émulsion de la composition bitumineuse 24 parties d'émulsion de MDI stabilisée au chlorhydrate de polyamines.

Comme dans l'exemple 1, on fait rompre l'émulsion sur plaques de verre et on compare le liant rompu à celui de l'émulsion de la composition bitumineuse. Les caractéristiques sont rassemblées sur le Tableau III suivant.

Exemple 3

On prépare une émulsion de bitume-PBHT comme indiqué dans l'exemple 1 (A) et une émulsion de MDI également comme indiqué dans l'exemple 1 (B).

On mélange ensuite 6 parties de l'émulsion de MDI avec 100 parties de l'émulsion de bitume PBHT.

On fait ensuite rompre cette émulsion en l'étalant en film mince sur plaque d'acier et en conservant sous courant d'air. On réalise ainsi, en plusieurs couches, un film de 1,5 mm de liant bitume-polyuréthanne. On découpe dans ce film des éprouvettes qu'on soumet à l'essai de traction. Les résultats suivants ont été obtenus:

– à 0°C et 100 mm/mn – Contrainte au seuil: $1,6 \cdot 10^5$ Pa
Allongement: > 300%
(limite de l'appareillage)
– à –15°C et 100 mm/mn – Contrainte au seuil: $2,4 \cdot 10^5$ Pa
Allongement: 56%

Ces résultats montrent un caractère élastomérique très marqué, dû au polyuréthanne.

Les compositions d'émulsion aqueuse de bitume-polyuréthanne obtenues selon l'invention sont notamment utiles pour la fabrication de:

– peintures et enduits, notamment pour la réalisation d'étanchéités,
– mastics pour garnissage de joints et scellement de fissures,
– coulis et enrobés à froid, pour revêtements de routes, aérodromes, terrains de sport, etc.,
– enrobés à froid pour revêtements comme ci-dessus,
– enduits superficiels pour revêtements comme ci-dessus.

### Tableau I – EMULSION COMPOSITE

| A. EMULSION BITUMINEUSE 60/40 (parties) COMPOSITION | | B. EMULSION DE MDI 40/60 (parties) COMPOSITION | |
|---|---|---|---|
| a) Liant (kg) | b) Phase aqueuse (g/l) | Liant (kg) | Phase aqueuse (g) |
| Bitume 180/220: 90 PBHT: 10 | Polyram S: 17,5 Dinoram S: 8,75 HCl à 33%: 24 | Suprasec 1042: 40 | Eau: 60 |
| 100 | | 6 | |

## Tableau II – VARIATION DU POURCENTAGE D'ISOCYANATE EN FONCTION DU TEMPS

| Temps (h) | % NCO |
|---|---|
| 0 | 100 |
| 3 | 88,5 |
| 24 | 68 |
| 27 | 64,7 |
| 48 | 54,1 |
| 120 | 42,6 |
| 144 | 44 |

## Tableau III –

| | | COMPOSITION | | |
|---|---|---|---|---|
| | | EBI | EBI – EMDI | EBI – EMDIS |
| | Temps de rupture (h) | 1,30 | 1 | 1 |
| Liant rompu | Aspect | brillant collant | terne non collant | terne non collant |
| | Tenue | non élastique | élastique | élastique |
| | Solubilité dans CCl$_4$ | totale | partielle | partielle |

EBI  : émulsion de la composition bitumineuse

EMDI  : émulsion de MDI

EMDIS : émulsion  de MDI stabilisée

**Revendications**

1. Procédé de préparation d'une composition d'émulsion aqueuse de bitume-polyuréthanne, caractérisé par les étapes suivantes:

(A) on réalise une émulsion de composition bitumineuse à partir de (a) une composition bitumineuse préparée en ajoutant, à une température de 100 à 150°C, 20 à 95 parties de bitume à 5 à 80 parties en poids d'un extenseur de polyuréthannes et (b) d'une phase aqueuse obtenue par dissolution dans l'eau de 1 à 20% en poids d'un émulsifiant choisi parmi un chlorhydrate de polyamine, un chlorhydrate d'amidoamine et un sel d'ammonium quaternaire, puis on émulsionne la composition bitumineuse (a) portée à une température de 120 à 150°C avec la phase aqueuse à une température de 40 à 80°C;

(B) on réalise une émulsion aqueuse de polyisocyanate en mélangeant, sous forte agitation, 20 à 50 parties en poids d'un polyisocyanate organique avec le complément à 100 parties d'eau; et

(C) on mélange les émulsions (A) et (B).

2. Procédé selon la revendication 1, caractérisé en ce que l'extenseur de polyuréthanne est choisi parmi un polyéthylèneglycol, polypropylèneglycol, les copolymères de ces derniers, des polyéthers polyesters, ou un polybutadiène hydroxytéléchélique.

3. Procédé selon la revendication 1 ou 2, caractérisé en ce que la phase aqueuse (b) est obtenue par mise en solution d'une polyamine dans l'eau puis addition d'acide chlorhydrique jusqu'à un rapport pondéral polyamine/acide de 2,2 ou 3,3.

4. Procédé selon la revendication 1 ou 2, caractérisé en ce que la phase aqueuse (b) est obtenue par mise en solution d'une amido-amine dans l'eau puis addition d'acide chlorhydrique jusqu'à un rapport pondéral amido-amine/acide de 2 à 3,5.

5. Procédé selon l'une quelconque des revendications 1 à 4, caractérisé en ce que l'émulsion de composition bitumineuse (A) est obtenue à partir d'une composition bitumineuse (a) portée à 140°C environ et d'une phase aqueuse (b) portée à 60°C environ, en une quantité telle que la teneur en liant de l'émulsion soit de 50 à 75% en poids.

6. Procédé selon la revendication 5, caractérisé en ce que la teneur en liant de l'émulsion est de 60% environ.

7. Procédé selon l'une quelconque des revendications 1 à 6, caractérisé en ce que le polyisocyanate est le diphénylméthane 4,4' -diisocyanate.

8. Procédé selon l'une quelconque des revendications 1 à 7, caractérisé en ce que, avant le mélange de (A) et (B) on stabilise l'émulsion aqueuse de polyisocyanate (B) en ajoutant une certaine quantité de phase aqueuse (b) préalablement préparée.

9. Procédé selon la revendication 8, caractérisé en ce que l'on ajoute 1 à 9 parties en poids de phase aqueuse pour une partie en poids d'émulsion mère de polyisocyanate.

10. Procédé selon l'une quelconque des revendications 1 à 7, caractérisé en ce que l'on ajoute de 4 à 50 parties d'émulsion de polyisocyanate (B) à 100 parties d'émulsion bitumineuse (A).

11. Procédé selon l'une des revendications 8 ou 9 caractérisé en ce que l'on ajoute de 15 à 120 parties d'émulsion de polyisocyanate stabilisée à 100 parties d'émulsion bitumineuse (A).

**Claims**

1. Process for the preparation of an aqueous asphalt-polyurethane emulsion composition, characterized by the following stages:

(A) an emulsion of asphalt composition is made starting from (a) an asphalt composition prepared by adding, at a temperature of 100 to 150°C, 20 to 95 parts of asphalt to 5 to 80 parts by weight of a polyurethane extender and from (b) an aqueous phase obtained by solution in water of 1 to 20% by weight of an emulsifier chosen from a polyamine hydrochloride, an amido-amine hydrochloride and a quaternary ammonium salt, then the asphalt composition (a) taken to a temperature of 120 to 150°C is emulsified with the aqueous phase at a temperature of 40 to 80°C;

(B) an aqueous polyisocyanate emulsion is made by mixing, under strong agitation, 20 to 50 parts by weight of an organic polyisocyanate made up to 100 parts with water; and

(C) the emulsions (A) and (B) are mixed.

2. Process according to claim 1, characterized in that the polyurethane extender is chosen from a polyethyleneglycol, a polypropyleneglycol, the copolymers of these latter, polyester polyethers, or a hydroxytelechelic polybutadene.

3. Process according to claims 1 or 2, characterized in that the aqueous phase (b) is obtained by dissolving a polyamine in water then adding hydrochloric acid until a weight ratio of polyamine/acid of 2.2 or 3.3 is obtained.

4. Process according to claims 1 or 2, characterized in that the aqueous phase (b) is obtained by dissolving an amido-amine in water then adding hydrochloric acid until a weight ratio of amido-amine/acid of 2 to 3.5 is obtained.

5. Process according to any one of the claims 1 to 4, characterized in that the emulsion of asphalt composition (A) is obtained starting from an asphalt composition (a) taken to about 140°C and an aqueous phase (b) taken to about 60°C, in a quantity such that the binder content of the emulsion is from 50 to 75% by weight.

6. Process according to claim 5, characterized in that the binder content of the emulsion is about 60%.

7. Process according to any one of the claims 1 to 6, characterized in that the polyisocyanate is diphenylmethane-4,4'-diisocyanate.

8. Process according to any one of the claims 1 to 7, characterized in that, before the mixing of (A) and (B) the aqueous polyisocyanate emulsion (B) is stabilized by adding a certain quantity of aqueous phase (b) previously prepared.

9. Process according to claim 8, characterized in that 1 to 9 parts by weight of aqueous phase are added for one part by weight of mother polyisocyanate emulsion.

10. Process according to any one of the claims 1 to 7, characterized in that from 4 to 50 parts of polyisocyanate emulsion (B) are added to 100 parts of asphalt emulsion (A).

11. Process according to either of the claims 8 and 9, characterized in that from 15 to 120 parts of stabilized polyisocyanate emulsion are added to 100 parts of asphalt emulsion (A).

**Patentansprüche**

1. Verfahren zur Herstellung einer wäßrigen Bitumen-Polyurethan-Emulsionszusammensetzung, gekennzeichnet durch die folgenden Stufen:
(A) man stellt eine Bitumen-Emulsion aus (a) einer bituminösen Zusammensetzung, die hergestellt wird, indem man bei einer Temperatur von 100 bis 150°C 20 bis 95 Teile Bitumen 5 bis 80 Gew.-Teilen eines Polyurethan-Streckmittels beigibt, und (b) einer wäßrigen Phase her, die durch Lösen von 1 bis 20 Gew.-% eines Emulgators in Wasser hergestellt wird, der ein Polyaminchlorhydrat, ein Amidoaminchlorhydrat oder ein quartäres Ammoniumsalz sein kann, und man emulgiert die auf eine Temperatur von 120 bis 150°C gebrachte bituminöse Zusammensetzung (a) mit der wäßrigen Phase mit einer Temperatur von 40 bis 80°C;
(B) man stellt eine wäßrige Polyisocyanat-Emulsion her, indem man unter starkem Rühren 20 bis 50 Gew.-Teile eines organischen Polyisocyanats ergänzend zu 100 Teilen mit Wasser mischt;
(C) man mischt die Emulsionen (A) und (B).

2. Verfahren nach Anspruch 1, dadurch gekennzeichnet, daß das Polyurethan-Streckmittel ein Polyethylenglykol, ein Polypropylenglykol, ein Copolymer von diesen, Polyetherpolyester oder ein hydroxytelecheles Polybutadien ist.

3. Verfahren nach Anspruch 1 oder 2, dadurch gekennzeichnet, daß die wäßrige Phase (b) durch Lösen eines Polyamins in Wasser und anschließende Beigabe von Salzsäure bis zu einem Gewichtsverhältnis von Polyamin zu Säure von 2,2 oder 3,3 hergestellt wird.

4. Verfahren nach Anspruch 1 oder 2, dadurch gekennzeichnet, daß die wäßrige Phase (b) durch Lösen eines Amido-Amins in Wasser und anschließende Beigabe von Salzsäure bis zu einem Gewichtsverhältnis von Amido-Amin zu Säure von 2 bis 3,5 hergestellt wird.

5. Verfahren nach einem der vorhergehenden Ansprüche, dadurch gekennzeichnet, daß die Bitumenemulsion (A) aus einer auf etwa 140°C gebrachten bituminösen Zusammensetzung (a) und einer auf etwa 60°C gebrachten wäßrigen Phase (b) in einer solchen Menge hergestellt wird, daß der Gehalt an Bindemittel der Emulsion 50 bis 75 Gew.-% beträgt.

6. Verfahren nach Anspruch 5, dadurch gekennzeichnet, daß der Gehalt an Bindemittel der Emulsion etwa 60% beträgt.

7. Verfahren nach einem der vorhergehenden Ansprüche, dadurch gekennzeichnet, daß das Polyisocyanat Diphenylmethan-4,4'-diisocyanat ist.

8. Verfahren nach einem der vorhergehenden Ansprüche, dadurch gekennzeichnet, daß die wäßrige Polyisocyanat-Emulsion (B) vor dem Mischen von (A) und (B) stabilisiert wird, indem eine gewisse Menge von zuvor hergestellter wäßriger Phase (b) beigegeben wird.

9. Verfahren nach Anspruch 8, dadurch gekennzeichnet, daß 1 bis 9 Gew.-Teile wäßrige Phase auf ein Gewichtsteil Polyisocyanat-Mutteremulsion beigegeben wird.

10. Verfahren nach einem der Ansprüche 1 bis 7, dadurch gekennzeichnet, daß 4 bis 50 Teile Polyisocyanat-Emulsion (B) 100 Teilen Bitumen-Emulsion (A) beigegeben werden.

11. Verfahren nach einem der Ansprüche 8 oder 9, dadurch gekennzeichnet, daß 15 bis 120 Teile stabilisierte Polyisocyanat-Emulsion 100 Teilen Bitumen-Emulsion (A) beigegeben werden.